# EUROPÄISCHE PATENTSCHRIFT

(11) **EP 1 232 017 B1**
(45) Veröffentlichungstag und Bekanntmachung des Hinweises auf die Patenterteilung: **04.08.2004**
(21) Anmeldenummer: 00969375.5
(22) Anmeldetag: 30.09.2000
(51) Int. Cl.: B05C 5/02, B05C 9/06, B60R 13/08, B62D 25/00, B05D 5/00

(54) **VERFAHREN UND ANLAGE ZUR HERSTELLUNG VON MIT EINER DÄMMSTOFFSCHICHT VERSEHENEN KAROSSERIEBAUTEILEN**
METHOD AND ARRANGEMENT FOR PRODUCING BODY COMPONENTS BEING PROVIDED WITH A SILENCING MATERIAL LAYER
PROCEDE ET INSTALLATION POUR REALISER UN COMPOSANT DE CARROSSERIE POURVU D'UNE COUCHE DE MATIERE ISOLANTE

(30) Priorität: 23.11.1999 DE 19956335
(43) Veröffentlichungstag der Anmeldung: 21.08.2002
(73) Patentinhaber: SCA Schucker GmbH & Co., 75015 Bretten (DE)
(72) Erfinder: SCHUCKER, Josef, 76227 Karlsruhe (DE)
(74) Vertreter: Wolf, Eckhard, Dr.-Ing.
(86) Internationale Anmeldenummer: PCT/EP2000/009622
(87) Internationale Veröffentlichungsnummer: WO 2001/038006

(56) Entgegenhaltungen:
- EP-A- 0 336 138
- EP-A- 0 723 843
- WO-A-96/08319
- WO-A-97/48576
- US-A- 4 569 869
- US-A- 5 418 040
- PATENT ABSTRACTS OF JAPAN vol. 013, no. 498 (M-890), 9. November 1989 (1989-11-09) & JP 01 199030 A (AISIN CHEM CO LTD;OTHERS: 01), 10. August 1989 (1989-08-10)
- PATENT ABSTRACTS OF JAPAN vol. 1999, no. 08, 30. Juni 1999 (1999-06-30) & JP 11 080599 A (MICRON TEC:KK), 26. März 1999 (1999-03-26)
- PATENT ABSTRACTS OF JAPAN vol. 1999, no. 01, 29. Januar 1999 (1999-01-29) & JP 10 264280 A (SEKISUI CHEM CO LTD), 6. Oktober 1998 (1998-10-06)
- PATENT ABSTRACTS OF JAPAN vol. 016, no. 206 (M-1248), 15. Mai 1992 (1992-05-15) & JP 04 031185 A (BRIDGESTONE CORP), 3. Februar 1992 (1992-02-03)
- PATENT ABSTRACTS OF JAPAN vol. 012, no. 237 (C-509), 6. Juli 1988 (1988-07-06) & JP 63 028475 A (NISSAN MOTOR CO LTD;OTHERS: 01), 6. Februar 1988 (1988-02-06)
- PATENT ABSTRACTS OF JAPAN vol. 015, no. 120 (M-1096), 25. März 1991 (1991-03-25) & JP 03 010831 A (KURIHARA KOGYO KK), 18. Januar 1991 (1991-01-18)

## Beschreibung

Die Erfindung betrifft ein Verfahren und eine Anlage zur Herstellung von Karosseriebauteilen, auf deren eine Breitseitenfläche eine streifenförmige Schicht aus einem Dämmstoff aufgebracht wird.

Im Kraftfahrzeugbau wird in Karosseriebauteilen, insbesondere in Türen, Dächern oder Fahrzeugböden ein akustisch wirksamer Dämmstoff eingeklebt. Der Dämmstoff besteht beispielsweise aus einer Bitumenmatte, die selbstklebend an einer inneren Breitseitenfläche des Karosseriebauteils angeklebt wird. Das Einkleben der Dämmstoffmatten erfolgt üblicherweise auf die Grundierung vor der Endlackierung. In diesem Verfahrenszustand ist das Bauteil bereits vollständig montiert. Dementsprechend schwer zugänglich ist die Stelle, an der die Dämmstoffmatte eingeklebt werden muß. Im Falle einer Tür befindet sie sich in einem Hohlraum zur Aufnahme eines herabgedrehten Fensters. Die Montage ist nur von Hand möglich. Hierbei können leicht Fehlmontagen auftreten, die zu Verschiebungen oder zum Abstehen von Ecken führen können, mit der Folge von Fehlfunktionen beispielsweise bei der Fensterbetätigung.

Ausgehend hiervon liegt der Erfindung der Gedanke zugrunde, ein Verfahren zu entwickeln, das eine vollautomatische Applizierung der Dämmstoffschicht im Rohbauzustand des Karosseriebauteils ermöglicht.

Zur Lösung dieser Aufgabe werden die in den unabhängigen Ansprüchen angegebenen Merkmalskombinationen vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß als Dämmstoffschicht ein thermisch verfestigbarer Kunststoff in viskoser Form auf die nach innen weisende Breitseitenfläche eines Rohbauteils, also auf ein frei zugängliches Einzelteil, wie z.B. des Außenbleches einer Kraftfahrzeugtür, aufgetragen wird. Materialien, die für Akustikzwecke geeignet sind, wie Epoxidharze oder PVC, nehmen im pastösen Zustand Feuchtigkeit auf. Verhindert man die Feuchtigkeitsaufnahme nicht, entstehen später beim Aushärten im Lackierofen Blasen, die das Aussehen der Oberfläche beeinträchtigen und zu Korrosionsproblemen führen können. Deshalb muß die Dämmstoffschicht gegen Feuchtigkeitsaufnahme geschützt werden, so daß eine Zwischenlagerung und/oder eine Weiterbearbeitung des Rohbauteils bis zum Fertigbauteil auch über längere Zeit möglich ist.

Um dies zu erreichen, wird nach einer ersten Erfindungsalternative vorgeschlagen, daß der aus einem thermisch verfestigbaren Kunststoff bestehende Dämmstoff in pastöser Form auf die Breitseitenfläche des Rohbauteils als Schicht aufgetragen und an der freien breitseitigen Schichtseite mit einer Deckschicht aus feuchtigkeitsundurchlässigem Material unlösbar überzogen wird. Das so vorkonfektionierte Karosserieteil kann unter Luftzutritt zwischengelagert und/oder einer Weiterverarbeitung zugeführt werden. Die eigentliche Verfestigung des Dämmstoffs erfolgt erst in einem späteren Verfahrensschritt vorzugsweise nach der Lackierung durch Aufheizen in einer Lackieranlage.

Gemäß einer bevorzugten Ausgestaltung der Erfindung wird der Dämmstoff unter Verwendung einer Breitschlitzdüse großflächig auf die Breitseitenfläche des Rohbauteils aufextrudiert.

Die Deckschicht kann dabei im Koextrusionsverfahren in pastöser Form zusammen mit dem Dämmstoff aufgetragen und anschließend feuchtigkeitsundurchlässig ausgehärtet werden.

Alternativ hierzu kann die Deckschicht als Folie von einer Rolle abgezogen und während des Auftrags des Dämmstoffs mit dessen freier Oberfläche flächig verbunden werden. Um eine Faltenbildung im Bereich der Deckschicht zu vermeiden, kann die Folie über eine formgebende Rolle abgezogen und konturengerecht mit der Dämmstoffschicht verbunden werden. Insbesondere kann dabei die Deckschicht über Umfangsrillen in der formgebenden Rolle mit materialverdrängenden Sicken versehen werden. Als Folienmaterial kommt beispielsweise eine Metallfolie, vorzugsweise eine Aluminiumfolie in Betracht. Grundsätzlich kann auch eine Kunststoffolie verwendet werden.

Eine alternative Verfahrensweise sieht vor, daß als Dämmstoff ein Zweikomponenten-Reaktionskunststoff verwendet wird, dessen Reaktionskomponenten in einer Breitschlitz-Mischdüse unter Bildung eines viskosen Reaktionsgemisches gemischt und über deren Düsenöffnung auf die Breitseitenfläche des Rohbauteils aufgetragen und dort vor einer Weiterverarbeitung unter Bildung einer feuchtigkeitsdichten Dämmschicht ausreagiert werden.

Eine weitere alternative Verfahrensweise sieht vor, daß der aus einem unter der Einwirkung von UV-Licht vemetzbaren Material bestehende Dämmstoff in viskoser Form auf die Breitseitenfläche eines Rohbauteiles aufgetragen und an der freien breitseitigen Schichtseite mit UV-Licht bestrahlt und dabei oberflächenversiegelt wird, und daß das so vorkonfektionierte Karosseriebauteil unter Luftzutritt zwischengelagert und/oder einer Weiterverarbeitung zugeführt und in einem späteren Verfahrensschritt unter gleichzeitiger Verfestigung des Dämmstoffs vorzugsweise in einem Lackierofen aufgeheizt wird.

Mit der erfindungsgemäßen Auftragstechnik ist es auch möglich, daß ein erster, weich aushärtender Dämmstoff und ein zweiter steif aushärtender Dämmstoff sandwichartig übereinander in viskoser Form auf die Breitseitenfläche eines Rohbauteils aufgetragen und an der freien breitseitigen Schichtseite oberflächenversiegelt werden, und daß das so vorkonfektionierte Karosserieteil unter Luftzutritt zwischengelagert und/oder einer Weiterverarbeitung zugeführt und in einem späteren Verfahrensschritt unter gleichzeitiger Verfestigung der Dämmstoffe vorzugsweise in einem Lackierofen aufgeheizt wird. Die nach diesem Verfahren hergestellten Karosseriebauteile zeichnen sich dadurch aus, daß sich das weiche Kernmaterial auf der Außenhaut des Karosseriebauteils nicht abzeichnet, während das steifer aushärtende Material die akustisch wirksame Dämmschicht bildet.

Die Anlagen zur Durchführung der vorstehenden Verfahren weisen durchweg eine Auftragsstation für Dämmstoffe auf, die je nach Verfahrensweise unterschiedlich ausgebildet ist.

Gemäß einer ersten Vorrichtungsaltemative sind mindestens zwei in Auftragsrichtung hintereinander angeordnete Breitschlitzdüsen vorgesehen, die über je einen durch eine Robotersteuerung ansteuerbaren Dosierer mit unterschiedlichen, viskosen, aushärtenden Materialien beaufschlagbar sind. Vorteilhafterweise ist dabei die in Auftragsrichtung vordere Breitschlitzdüse mit einem thermisch aushärtbaren Dämmstoff und die in Auftragsrichtung hintere Breitschlitzdüse mit einem feuchtigkeits dicht aushärtbaren Dichtstoff beaufschlagbar. Die Dichtstoffschicht hat die Aufgabe, den Dämmstoff vor dem Aushärten zu einem späteren Zeitpunkt, beispielsweise im Lackierofen, gegen Feuchtigkeitszutritt zu schützen.

Mit dieser Auftragstechnik kann auch ein Karosseriebauteil hergestellt werden, das eine weich aushärtende Kernschicht und eine steif aushärtende Deckschicht aufweist. Zu diesem Zweck wird die in Auftragsrichtung vordere Breitschlitzdüse mit einem weich aushärtenden Dämmstoff und die in Auftragsrichtung hintere Breitschlitzdüse mit einem steif aushärtenden Dämmund Dichtstoff beaufschlagt. Um die Viskositäten der Dämm- und Dichtstoffe unabhängig voneinander beeinflußen zu können, ist es von Vorteil, wenn die Breitschlitzdüsen jeweils eine über einen zugehörigen Temperaturregier ansteuerbare Heizeinrichtung aufweisen.

Bei einer abgewandelten Anlagenkonfiguration weist die Auftragsstation eine Breitschlitz-Mischdüse auf, deren vorgeschaltete Mischstufe eingangsseitig mit zwei über eine Robotersteuerung ansteuerbare Materialdosierung für die Reaktionskomponenten eines Reaktionskunststoffs verbunden ist. Die Mischstufe ist dabei zweckmäßig als statischer oder dynamischer (angetriebener) Mischer ausgebildet. Zur Verbesserung der Reinigungsmöglichkeit besteht die Breitschlitz-Mischdüse zweckmäßig aus mindestens zwei teilbaren druckfesten Metallschalen, die eine auswechselbare Kunststoffeinlage als Wegwerfteil enthalten können. Alternativ dazu können die Metallschalen auch mit einem Trennmittel vorzugsweise aus Tetrafluorethylen beschichtet sein, das ein Anhängen des aushärtenden Reaktionskunststoffs verhindert.

Gemäß einer weiteren alternativen Ausgestaltung der Erfindung weist die Auftragsstation eine über einen robotergesteuerten Dosierer mit viskosem Dämmstoff beaufschlagbare Breitschlitzdüse sowie eine UV-Lichtquelle zur Oberflächenversiegelung der über die Breitschlitzdüse aufgetragenen Dämmstoffschicht auf. Die Oberflächenversiegelung sorgt dafür, daß die Dämmstoffschicht während der Zwischenlagerung und dem Transport des Karosserieteils gegen Feuchtigkeitszutritt geschützt wird.

Bei einer weiteren Anlagenvariante weist die Auftragsstation eine über einen robotergesteuerten Dosierer mit viskosern Dämmstoff beaufschlagbare Breitschlitzdüse sowie einen über die Robotersteuerung ansteuerbaren Folienspender zum Auftragen einer feuchtigkeitsundurchlässigen Folie aus Metall oder Kunststoff auf die über die Breitschlitzdüse aufgetragene viskose Dämmstoffschicht auf.

Mit den vorstehenden Verfahrens- und Anlagenaltemativen werden vorkonfektionierte Karosseriebauteile hergestellt, deren Dämmstoffschicht eine pastöse Kemschicht und eine feuchtigkeitsundurchlässige Deckschicht oder Oberflächenversiegelung aufweist. Alternativ dazu kann damit auch ein Karosseriebauteil herstellt werden, dessen Dämmstoffschicht eine weich ausgehärtete Kernschicht und eine steif ausgehärtete Deckschicht aufweist. Je nach Bedarf können die Kern- und Deckschicht eine unterschiedliche Dicke aufweisen.

Im folgenden wird die Erfindung anhand der in der Zeichnung in schematischer Weise dargestellten Ausführungsbeispiele näher erläutert. Es zeigen
- Fig. 1a: ein Schema einer Auftragsstation zum Auftragen von Dämmstoffen auf Karosseriebauteile mit zwei getrennt beaufreklagbaren Breitschlitzdüsen;
- Fig. 1b: einen vergrößerten Ausschnitt aus Fig. 1a aus dem Bereich des Düsenaustritts;
- Fig. 2: ein Schema einer Auftragsstation mit Breitschlitz-Mischdüse;
- Fig. 3: ein Schema einer Auftragsstation mit Breitschlitzdüse und nachgeordneten UV-Strahler;
- Fig. 4: ein Schema einer Auftragsstation mit Breitschlitzdüse und nachgeordnetem Folienspender.
- Fig. 5: eine Auftragsstation zum Auftragen von Dämmstoffen auf Karosseriebauteile in schaubildlicher Darstellung.

Die in der Zeichnung schematisch dargestellten Auftragsstationen sind zur Beschichtung von Karosseriebauteilen 48 im Rohzustand mit Dämmstoffen mittels eines Roboters 35 bestimmt. Die mit den Dämmstoffschichten 44 versehenen vorkonfektionierten Karosseriebauteile 48 werden unter Luftzutritt zwischengelagert und/oder einer Weiterbearbeitung zugeführt und in einem späteren Verfahrensschritt unter gleichzeitiger Verfestigung des Dämmstoffs vorzugsweise in einem Lackierofen aufgeheizt. Die Karosseriebauteile werden in der Auftragsstation so behandelt, daß die noch in pastöser Form vorliegenden Dämmstoffe gegen Feuchtigkeitszutritt geschützt oder versiegelt werden.

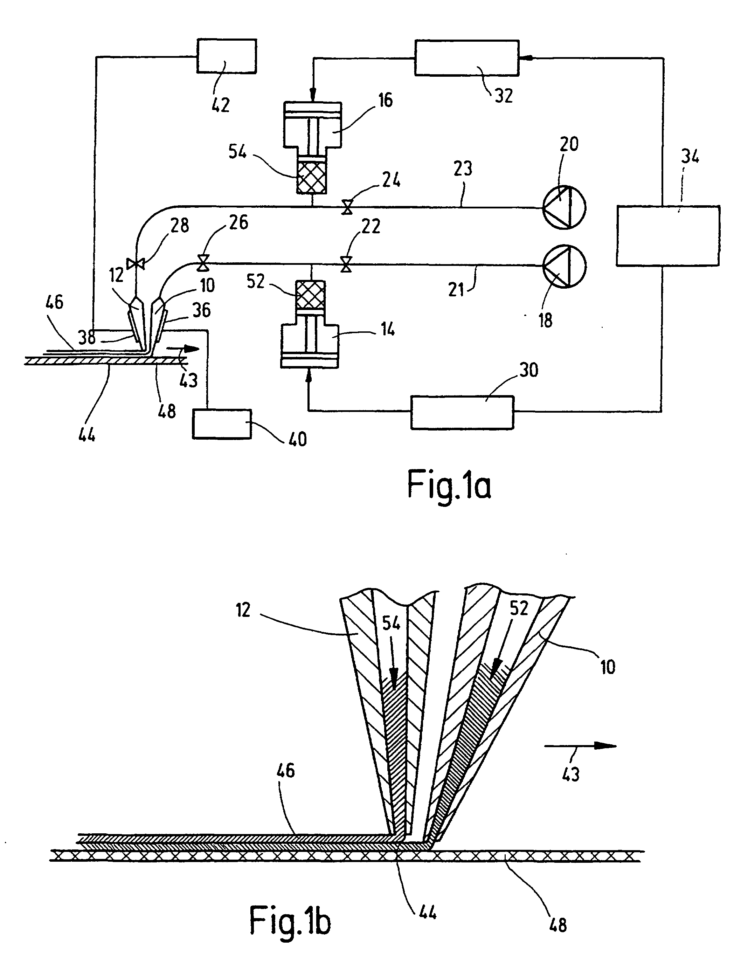

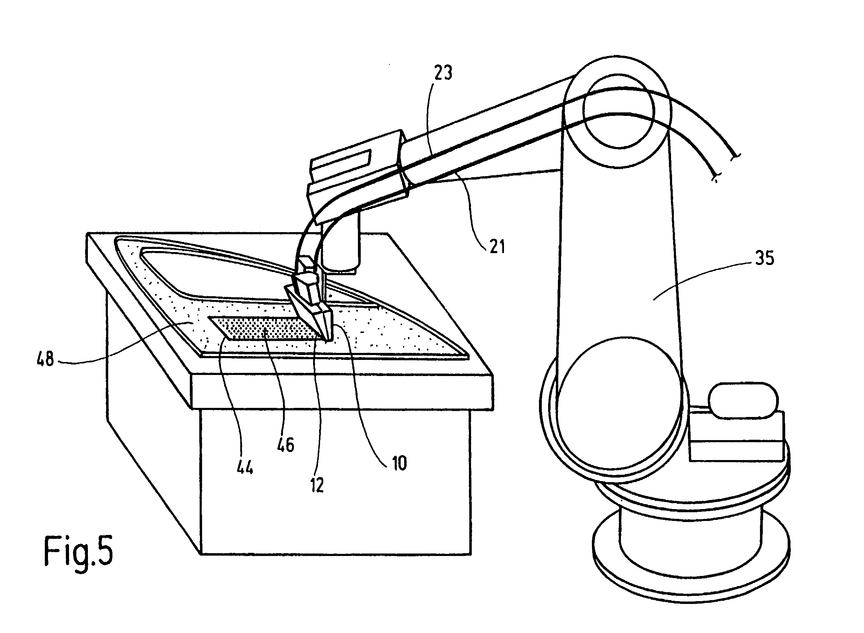

Die in Fig. 1a und 1b sowie 5 gezeigte Auftragsstation umfaßt zwei Breitschlitzdüsen 10, 12, die über getrennte Dosierer 14, 16 mit verschiedenen viskosen Kunststoffmaterialien 52, 54 beaufschlagbar sind. Die Materialzufuhr zu den Dosierern 14, 16 erfolgt über Materialpumpen 18, 20, die das Material aus nicht dargestellten Materialfässern entnehmen. In den Materialzuführleitungen 21, 23 vor und hinter den Dosierern 14, 16 befindet sich je ein Kugelhahn 22, 24 sowie 26, 28. Die Dosierer 14, 16 werden über je eine Dosiersteuerung 30, 32 angesteuert, die an zwei Ausgänge der Robotersteuerung 34 angeschlossen sind. Die Breitschlitzdüsen 10, 12 enthalten außerdem eine Heizeinrichtung 36, 38, die über je einen Temperaturregler 40, 42 ansteuerbar ist.

Über die Dosiersteuerungen 30, 32 werden die Breitschlitzdüsen 10, 12 vorzugsweise mit jeweils einer vorgegebenen Dosiermenge pro Zeiteinheit beaufschlagt. Die Mengensteuerung (Volumensteuerung) erfolgt dabei unabhängig von der Materialviskosität. Die Ansteuerung der Dosiersteuerung erfolgt dabei geschwindigkeitsabhängig über die Robotersteuerung 34. Die beiden Ausgänge der Robotersteuerung 34 sind frei prgrammierbar. Deshalb kann man über die Breitschlitzdüsen 10, 12 bei Bedarf unterschiedliche Schichtstärken auftragen.

Üblicherweise wird über die in Auftragsrichtung 43 vordere Breitschlitzdüse 10 eine Schicht 44 aus akustisch wirksamem Dämmstoff aufgetragen, während über die Breitschlitzdüse 12 zweckmäßig eine feuchtigkeitsundurchlässige Deckschicht 46 aufgetragen wird. Die Deckschicht 46 kann dabei dünner als die Dämmschicht 44 sein. Im Ergebnis erhält man somit ein vorkonfektioniertes Karosseriebauteil 48, das mit einer noch nicht ausgehärteten Dämmschicht 44 und einer die Dämmschicht 44 vor Feuchtigkeitszutritt schützenden Deckschicht 46 versehen ist. Das Karosseriebauteil 48 ist beispielsweise als Außenblech einer Kraftfahrzeugtür ausgebildet. Dieses Außenbiech kann ohne Schaden für die Dämmstoffschicht 44 unter Luftzutritt zwischengelagert und transportiert werden, um zu einem späteren Zeitpunkt an anderer Stelle zur fertigen Tür montiert und in einer Lackieranlage lackiert zu werden. Der Dämmstoff in der Schicht 44 wird in diesem Fall vorzugsweise bei erhöhter Temperatur im Lackierofen vollständig ausgehärtet.

Die in Fig. 1a und 1b gezeigte Auftragsstation kann auch zur Erzeugung anderer sandwichartiger Schichten verwendet werden. So kann beispielsweise für die Kemschicht 44 ein weich aushärtendes Material 52 verwendet werden, das sich nach dem Aushärten auf der Blechaußenhaut nicht abzeichnet. Die Deckschicht 46 wird in diesem Fall als akustisch wirksame Dämmstoffschicht eingesetzt, die mit entsprechend dicker Wandstärke steif aushärtet und durch die weiche Kemschicht 44 gegenüber dem Karosserieblech 48 abgepolstert wird.

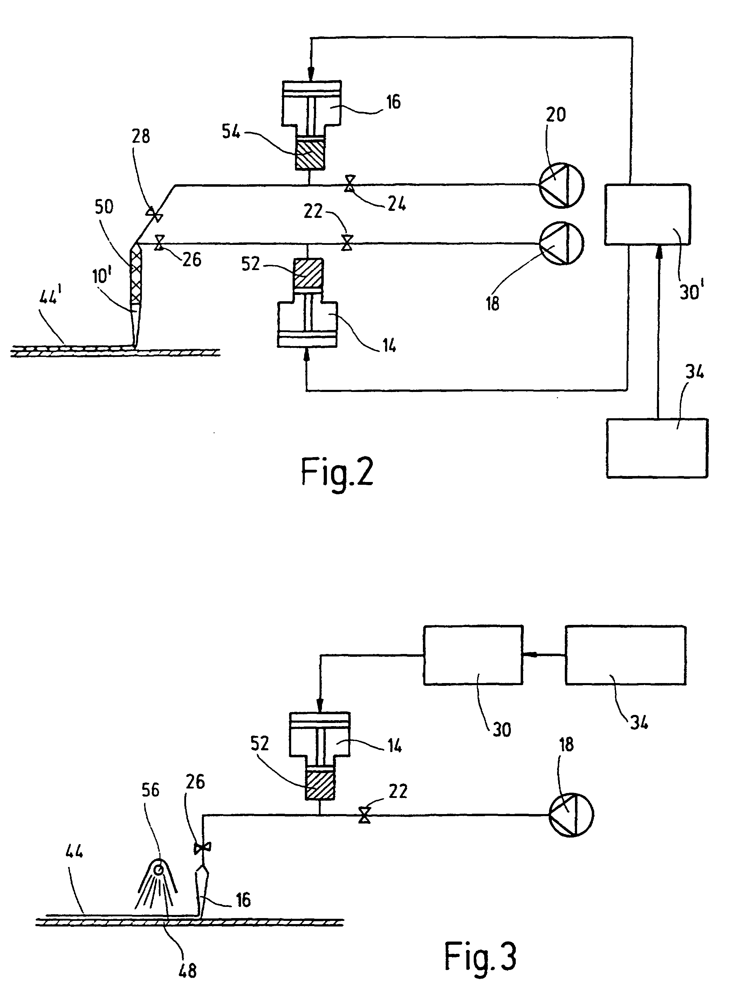

Bei dem in Fig. 2 gezeigten Ausführungsbeispiel ist statt der beiden Breitschlitzdüsen 10, 12 zur Koextrusion von zwei verschiedenen viskosen Stoffen eine Breitschlitz-Mischdüse 10' vorgesehen, die eingangsseitig einen vorzugsweise statischen Mischer 50 aufweist, der über die Dosierer 14, 16 und die Materialpumpen 18, 20 mit den beiden Reaktionskomponenten 52, 54 eines Reaktionskunststoffes beaufschlagbar sind. Die Ansteuerung der Dosierer 14, 16 erfolgt hierbei über eine Zweikomponenten-Dosiersteuerung 30', die ihrerseits geschwindigkeitsabhängig über die Robotersteuerung 34 ansteuerbar ist. Im Ergebnis erhält man hierbei eine aus der Breitschlitz-Mischdüse 10' austretende streifenförmige Dämmstoffschicht 44', die durch Reaktion der beiden Komponenten 52, 54 auf dem Karosserieblech 48 alsbald nach dem Auftrag aushärtet und die Dämmstoffschicht 44 vor einem Feuchtigkeitszutritt schützt.

Bei dem Ausführungsbeispiel nach Fig. 3 ist nur eine Breitschlitzdüse 10 vorgesehen, die über einen Dosierer 14 und eine Materialpumpe 18 mit Dämmstoff 52 beaufschlagt wird. Die Mengensteuerung erfolgt hierbei über eine Dosiersteuerung 30, die über die geschwindigkeitsabhängige Robotersteuerung 34 ansteuerbar ist.

In Auftragsrichtung hinter der Breitschlitzdüse 10 befindet sich ein UV-Strahler 56, der dafür sorgt, daß die über die Breitschlitzdüse 10 auf das Karosserieblech 48 aufgetragene Dämmstoffschicht 44 durch UV-Vernetzung im Oberflächenbereich gegen Feuchtigkeitszutritt versiegelt wird. Die vollständige Aushärtung der Dämmstoffschicht 44 erfolgt auch hier zu einem späteren Zeitpunkt durch thermische Aktivierung beispielsweise in einem Lackierofen.

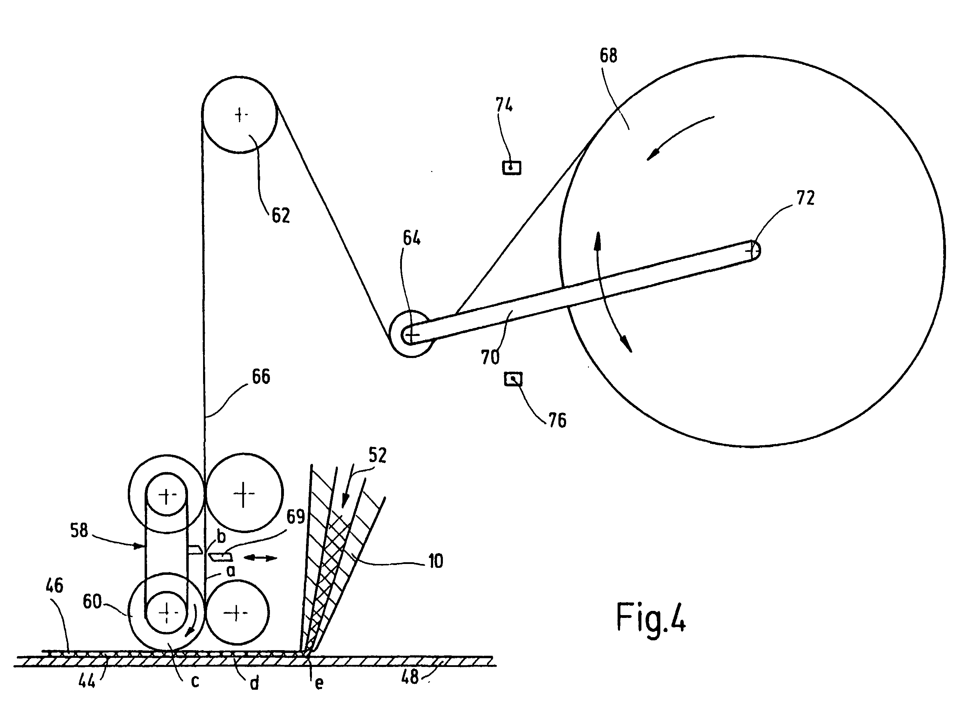

In dem in Fig. 4 gezeigten Ausführungsbeispiel einer Auftragsstation ist gleichfalls nur eine Auftragsdüse 10 vorgesehen, die ähnlich wie im Falle der Fig. 3 über einen Dosierer mit dem Dämmaterial 52 beaufschlagbar ist. In Auftragsrichtung hinter der Breitschlitzdüse 10 befindet sich dort ein Folienspender 58, der über das angetriebene Rollensystem 60 und die Umlenkrollen 62, 64 eine Kunststoffolie 66 geeigneter Breite von einer Vorratsrolle 68 abzieht und auf die Oberfläche der über die Breitschlitzdüse 10 auf das Karosserieblech 48 aufgetragenen Dämmstoffschicht 44 unter Bildung einer Deckschicht 46 appliziert. Der Folienabzug wird dabei ebenfalls geschwindigkeitsabhängig über die Robotersteuerung gesteuert. Der Folienspender 58 umfaßt ferner eine Schneidvorrichtung 69 zum Abtrennen der Folienbahn 66 am Ende einer Dämmstoffschicht 44. Es ist dabei vorteilhaft, wenn die Strecke d zwischen den Positionen c und e länger ausgelegt wird als die Strecke a zwischen den Positionen b und c, damit nicht während der Roboterbewegung, also während des Auftrags der Dämmstoffschicht 44, die Folie 66 geschnitten werden muß. Der die Umlenkrolle 64 tragende Hebel 70, der um die Achse 72 der Vorratsrolle 68 verschwenkbar ist, und die beiden Sensoren 74, 76 sorgen dafür, daß ein ungestörter Folienabzug erfolgt. Der Sensor 74 dient dabei zum Einschalten des Motors der Vorratsrolle 68 über den hochschwingenden Hebel 70, während der über den Hebel 70 betätigbare Sensor 76 den Antriebsmotor der Vorratsrolle jeweils abschaltet. Die zwischen den beiden Sensoren 74, 76 abgespulte Folienmenge sollte ausreichen, um eine Bahn 46 über die Dämmstoffschicht 44 auf den Karosseriebauteil 48 zu legen. In diesem Fall wird vermieden, daß es aufgrund der Massenträgheit der Vorratsrolle 68 zu Störungen beim Folienabzug kommt.

Zusammenfassend ist folgendes festzustellen: Die Erfindung bezieht sich auf ein Verfahren und eine Anlage zur Herstellung von mit einer akustisch wirksamen Dämmstoffschicht 44 versehenen Karosseriebauteilen 48. Um eine vollautomatische Konfektionierung mit der Dämmstoffschicht 44 zu ermöglichen, wird der aus einem thermisch verfestigbaren Kunststoff bestehende Dämmstoff in pastöser, feuchtigkeitsaufnehmender Form auf die Breitseitenfläche eines Rohbauteils als Schicht 44 aufgetragen und an der freien breitseitigen Schichtseite mit einer Deckschicht 46 aus feuchtigkeitsundurchlässigem Material unlösbar überzogen. Das so vorkonfektionierte Karosseriebauteil 48 kann beliebig unter Luftzutritt zwischengelagert, transportiert und/oder einer Weiterverarbeitung zugeführt werden. Die Verfestigung des Dämmstoffs 44 erfolgt erst in einem späteren Verfahrensschritt beispielsweise in einem Lackierofen.

## Patentansprüche

1. Verfahren zur Herstellung von Karosseriebauteilen, auf deren eine Breitseitenfläche eine streifenförmige Schicht (44) aus einem Dämmstoff aufgebracht wird, **dadurch gekennzeichnet, daß** der aus einem thermisch verfestigbaren Kunststoff bestehende Dämmstoff (52) in viskoser Form unmittelbar auf die Breitseitenfläche des Karosseriebauteils (48) im Rohzustand in Schichtform (44) aufgetragen und an der freien breitseitigen Schichtseite mit einer feuchtigkeitsundurchlässigen Deckschicht (46) unlösbar überzogen wird, und daß das so vorkonfektionierte Karosseriebauteil unter Luftzutritt zwischengelagert und/oder einer Weiterverarbeitung zugeführt und in einem späteren Verfahrensschritt lackiert und dabei unter gleichzeitiger Verfestigung des Dämmstoffs (44) aufgeheizt wird.

2. Verfahren nach Anspruch 1, **dadurch gekennzeichnet, daß** der Dämmstoff (44) unter Verwendung einer Breitschlitzdüse (10) großflächig auf die Breitseitenfläche des Karosseriebauteils (48) im Rohzustand aufextrudiert wird.

3. Verfahren nach Anspruch 2, **dadurch gekennzeichnet, daß** die Deckschicht (46) im Koextrusionsverfahren in pastöser Form zusammen mit dem Dämmstoff (44) aufgetragen wird.

4. Verfahren nach Anspruch 1 oder 2, **dadurch gekennzeichnet, daß** die Deckschicht (46) als Folie (66) von einer Vorratsrolle abgezogen und während des Auftrags des Dämmstoffs (44) mit dessen freier Oberfläche flächig verbunden wird.

5. Verfahren nach Anspruch 4, **dadurch gekennzeichnet, daß** die Folie (66) über eine formgebende Rolle (60) abgezogen und konturengerecht mit der Dämmstoffschicht verbunden wird.

6. Verfahren nach Anspruch 5, **dadurch gekennzeichnet, daß** die Folie (66) über Umfangsrillen in der formgebenden Rolle (60) mit materialverdrängenden Sicken versehen wird.

7. Verfahren nach einem der Ansprüche 4 bis 6, **dadurch gekennzeichnet, daß** als Folie (66) eine Metallfolie, vorzugsweise eine Aluminiumfolie verwendet wird.

8. Verfahren nach einem der Ansprüche 4 bis 6, **dadurch gekennzeichnet, daß** als Folie (66) eine Kunststofffolie verwendet wird.

9. Verfahren zur Herstellung von Karosseriebauteilen, auf deren eine Breitseitenfläche eine streifenförmige Schicht (44) aus einem Dämmstoff aufgebracht wird, **dadurch gekennzeichnet, daß** als Dämmstoff ein Zweikomponenten-Reaktionskunststoff verwendet wird, dessen Reaktionskomponenten (52, 54) in einer Breitschlitz-Mischdüse (10') unter Bildung eines viskosen Reaktionsgemisches gemischt und über deren Düsenöffnung unmittelbar auf die Breitseitenfläche des Karosseriebauteils (48) im Rohzustand aufgetragen und dort vor einer Weiterverarbeitung unter Bildung einer feuchtigkeitsdichten Dämmstoffschicht (44) ausreagiert werden, und daß das so vorkonfektionierte Karosseriebauteil unter Luftzutritt zwischengelagert und in einem späteren Verfahrensschritt lackiert und unter gleichzeitiger Aushärtung des Dämmstoffs aufgeheizt wird.

10. Verfahren zur Herstellung von Karosseriebauteilen, auf deren eine Breitseitenfläche eine streifenförmige Schicht aus einem Dämmstoff aufgebracht wird, **dadurch gekennzeichnet, daß** der aus einem unter der Einwirkung von UV-Licht vernetzbaren Material bestehende Dämmstoff in viskoser Form unmittelbar auf die Breitseitenfläche des Karosseriebauteils (48) im Rohzustand aufgetragen und an der freien breitseitigen Schichtseite mit UV-Licht (56) bestrahlt und dabei oberflächenversiegelt wird, und daß das so vorkonfektionierte Karosseriebauteil unter Luftzutritt zwischengelagert und/oder einer Weiterverarbeitung zugeführt und in einem späteren Verfahrensschritt lackiert und unter gleichzeitiger Verfestigung des Dämmstoffs (44) aufgeheizt wird.

11. Verfahren zur Herstellung von Karosseriebauteilen, auf deren eine Breitseitenfläche eine streifenförmige Schicht aus einem Dämmstoff aufgebracht wird, **dadurch gekennzeichnet, daß** ein erster weich aushärtender Dämmstoff (52) und ein zweiter steif aushärtender Dämmstoff (54) in sandwichartigen Schichten (44, 46) übereinander in viskoser Form unmittelbar auf die Breitseitenfläche des Karosseriebauteils (48) im Rohzustand aufgetragen und anschließend feuchtigkeitsdicht oberflächenversiegelt werden und daß das so vorkonfektionierte Karosseriebauteil unter Luftzutritt zwischengelagert und/oder einer Weiterverarbeitung zugeführt und in einem späteren Verfahrensschritt lakkiert und unter gleichzeitiger Verfestigung der Dämmstoffe aufgeheizt wird.

12. Anlage zur Herstellung von Karosseriebauteilen, die auf einer Breitseitenfläche mit einer streifenförmigen Dämmstoffschicht (44) versehen werden, **gekennzeichnet durch** eine Auftragsstation für Dämmstoffe, die mindestens zwei in Auftragsrichtung hintereinander angeordnete Breitschlitzdüsen (10, 12) aufweist, die über je einen mittels einer Robotersteuerung angesteuerten Dosierer (14, 16) mit unterschiedlichen viskosen aushärtbaren Materialien (52, 54) beaufschlagbar sind, wobei die Breitschlitzdüsen (10, 12) über getrennte Temperaturregler (40, 42) ansteuerbare Heizeinrichtungen (36, 38) aufweisen.

13. Anlage nach Anspruch 12, **dadurch gekennzeichnet, daß** die in Auftragsrichtung vordere Breitschlitzdüse (10) mit einem thermisch aushärtbaren Dämmstoff (52) und die in Auftragsrichtung hintere Breitschlitzdüse (12) mit einem feuchtigkeitsdicht aushärtbaren Dichtstoff (54) beaufschlagbar ist.

14. Anlage nach Anspruch 12 oder 13, **dadurch gekennzeichnet, daß** die in Auftragsrichtung vordere Breitschlitzdüse (10) mit einem weich aushärtenden Dämmstoff (52) und die in Auftragsrichtung hintere Breitschlitzdüse (12) mit einem steif aushärtenden Dämm- oder Dichtstoff (54) beaufschlagbar ist.

15. Anlage zur Herstellung von Karosseriebauteilen, die auf einer Breitseitenfläche mit einer streifenförmigen Dämmstoffschicht versehen werden, **gekennzeichnet durch** eine Auftragsstation für Dämmstoffe, die eine aus mindestens zwei teilbaren druckfesten Metallschalen bestehende Breitschlitz-Mischdüse (10') aufweist, deren Mischer (50) eingangsseitig mit zwei über eine Robotersteuerung (34) ansteuerbaren Dosierem (14, 16) für die beiden Reaktionskomponenten (52, 54) eines Reaktionskunststoffes verbunden ist.

16. Anlage nach Anspruch 15, **dadurch gekennzeichnet, daß** die Mischstufe der Breitschlitz-Mischdüse (10') als statischer oder dynamischer Mischer (50) ausgebildet ist.

17. Anlage nach Anspruch 15 oder 16, **dadurch gekennzeichnet, daß** die Metallschalen eine auswechselbare Kunststoffeinlage aufweisen.

18. Anlage nach einem der Ansprüche 15 bis 17, **dadurch gekennzeichnet, daß** die Metallschalen mit einem Trennmittel, vorzugsweise aus Tetrafluorethylen beschichtet sind.

19. Anlage zur Herstellung von Karosseriebauteilen, die auf einer Breitseitenfläche mit einer streifenförmigen Dämmstoffschicht (44) versehen werden, **gekennzeichnet durch** eine Auftragsstation für Dämmstoffe, die eine mittels eines robotergesteuerten Dosierers (14) mit viskosem Dämmstoff (52) beaufschlagbare Breitschlitzdüse (10) sowie eine UV-Lichtquelle (56) zur Oberflächenversiegelung der mit der Breitschlitzdüse (10) aufgetragenen Dämmstoffschicht (44) aufweist.

20. Anlage zur Herstellung von Karosseriebauteilen, die auf einer Breitseitenfläche mit einer streifenförmigen Dämmstoffschicht (44) versehen werden, mit einer Auftragsstation für Dämmstoffe, **dadurch gekennzeichnet, daß** die Auftragsstation eine mittels eines durch eine Robotersteuerung angesteuerten Dosierers (14) mit viskosem Dämmstoff (52) beaufschlagbare Breitschlitzdüse (10) sowie einen über die Robotersteuerung (34) ansteuerbaren Folienspender (58) zum Auftragen einer feuchtigkeitsundurchlässigen Folie (46, 66) auf die über die Breitschlitzdüse (10) aufgetragene Dämmstoffschicht (44) aufweist, daß der Folienspender (58) eine Schneidvorrichtung (69) aufweist, und daß die Länge (a) der zwischen der Schneidvorrichtung (69) und der Auftragsstelle befindlichen Folie (66) kleiner ist als die Länge (d) der zwischen der Auftragsstelle der Folie und der Breitschlitzdüse (10) befindlichen Dämmstoffschicht (44).

21. Karosseriebauteil für Kraftfahrzeuge mit einer auf einer Breitseitenfläche angeordneten Dämmstoffschicht, **dadurch gekennzeichnet, daß** die Dämmstoffschicht eine viskose Kernschicht (44) und eine feuchtigkeitsundurchlässige Deckschicht (46) oder Oberflächenversiegelung aufweist.

22. Karosseriebauteil nach Anspruch 21, **dadurch gekennzeichnet, daß** die Deckschicht (46) dünner als die Kernschicht (44) ist.

23. Karosseriebauteil für Kraftfahrzeuge mit einer auf einer Breitseitenfläche angeordneten Dämmstoffschicht, **dadurch gekennzeichnet, daß** die Dämmstoffschicht eine weich ausgehärtete Kemschicht (44) und eine steif ausgehärtete Deck- oder Dämmschicht (46) aufweist.

24. Karosseriebauteil nach Anspruch 23, **dadurch gekennzeichnet, daß** die steifere Deck- oder Dämmschicht (46) dicker als die weichere Kernschicht (44) ist.

## Claims

1. Process for producing a vehicle body component, upon one broad surface of which a strip-shaped layer (44) of a silencing material is applied, thereby characterized, that the silencing material (52) is a thermally curable plastic in uncured form and is applied directly onto the broad surface of a pre-assembly vehicle body component (48) in viscous form in a layer-form (44), and that on its exposed broad surface it is covered over with a non-releasable moisture impermeable cover layer (46), and that the thus pre-assembled vehicle body component is temporarily stored with exposure to air and/or is subjected to a further processing, and then in a later processing step is painted and heated with simultaneous curing of the silencing layer (44).

2. Process according to Claim 1, thereby characterized, that the silencing material (44) is extruded in the uncured state over a large surface area on a broad surface of the pre-assembly vehicle body component (48) by use of a broad slit nozzle (10).

3. Process according to Claim 2, thereby characterized, that the cover layer (46) is applied during co-extrusion in pasty form simultaneously with the silencing material (44).

4. Process according to Claim 1 or 2, thereby characterized, that the cover layer (46) is drawn from a supply roll in the form a foil (66) and during the application of the silencing material (44) is surface-bonded to the exposed surface of the silencing material.

5. Process according to Claim 4, thereby characterized, that the foil (66) is drawn from a contouring roller (60) and is contour-fittingly applied to the silencing material layer.

6. Process according to Claim 5, thereby characterized, that the foil (66) is provided, via circumference ridges in the contour roller (60), with material displacing folds or corrugations.

7. Process according to one of Claims 4 to 6, thereby characterized, that the foil (66) is a metal foil, preferably an aluminum foil.

8. Process according to one of Claims 4 to 6, thereby characterized, that the foil (66) is a plastic foil.

9. Process for producing vehicle body components, upon which broad surface a strip shaped layer (44) of a silencing material is applied, thereby characterized, that as silencing material a two component reaction resin is employed, of which the reaction components (52, 54) are mixed in a broad slit mixing nozzle (10') under formation of a viscous reaction mixture and via the nozzle opening are applied directly upon the broad surface of a pre-assembly vehicle body component (48) in the uncured state and there, prior to a further processing, are processed to form a moisture impermeable silencing material layer (44), and that the thus prepackaged vehicle body component is temporarily stored under exposure to air and/or is subjected to a further processing, and then in a later processing step is painted and heated with simultaneous curing of the silencing layer (44).

10. Process for production of a pre-packaged vehicle body component, upon one broad surface of which a strip-shaped layer of a silencing material is applied, thereby characterized, that a silencing material comprised of a material which is cross-linkable under the influence of UV-light is applied directly upon the broad surface of a pre-assembly vehicle body component (48) in viscous form in the uncured state and is irradiated on the exposed side of the layer with UV-light (56) and thereby is sealed over the surface, and that the thus pre-packaged vehicle body component is temporarily stored under exposure to air and/or is subjected to a further processing, and then in a later process step is painted and heated with simultaneous curing of the silencing material (44).

11. Process for production of vehicle body components, upon which broad side surface a strip-shaped layer of a silencing material is applied, thereby characterized, that a first softer-hardening silencing material (52) and a second more rigid-hardening silencing material (54) are applied sandwich-like in layers (44, 46), one over the other, in viscous form directly upon the broad surface of the pre-assembly vehicle body component (48) in the uncured state and subsequently surface sealed for moisture resistance, and that the thus pre-packaged vehicle body component is temporarily stored under exposure to air and/or is subjected to a further processing, and then in a later process step is painted and heated with simultaneous curing of the silencing material (44).

12. Device for producing vehicle body components, which are provided upon one broad surface with a strip-shaped silencing material layer (44), thereby characterized, that an application station for silencing materials, which includes at least two broad-slit nozzles (10, 12) arranged sequentially in the application direction, which are respectively supplied via a robotic-controlled metering means (14, 16) with materials (52, 54) of different viscosities which cure to different hardnesses, that each of the broad-slit nozzles (10, 12) are provided with heating devices (36, 38) controllable via separate temperature regulators (40, 42).

13. Device according to Claim 12, thereby characterized, that the more forward broad-slit nozzle (10) in the application direction is supplied with a thermally curable silencing material (52) and the more rearward broad-slit nozzle (12) in the application direction is supplied with a silencing material (54) which cures to form a moisture-impermeable layer.

14. Device according to Claim 12 or 13, thereby characterized, that the broad-slit nozzle (10) upstream in the application direction is supplied with a softer-curing silencing material (52) and the broad-slit nozzle (12) downstream in the application direction is supplied with a more rigid-hardening silencing or sealing material (54).

15. Device for production of vehicle body components, which are provided upon one broad surface with a strip-shaped silencing material layer, thereby characterized, that an application station for silencing materials includes a broad-slit mixing nozzle (10') comprised of at least two separable pressure-tight metal shells, and that the mixer (50) is connected on the inlet side with two metering means (14, 16) controllable via a robotic control (34) for the two reaction components (52, 54) of a reaction resin.

16. Device according to Claim 15, thereby characterized, that the mixing stage of the broad slit mixing nozzle (10') is a static or dynamic mixer (50).

17. Device according to Claim 15 or 16, thereby characterized, that the metal shells are provided with a disposable plastic insert.

18. Device according to one of Claims 15 to 17, thereby characterized, that the metal shells are coated with a separation material, preferably tetrafluoroethylene.

19. Device for production of vehicle body components, which are provided on one broad surface with a strip-shaped silencing material layer (44), including an application station for the application of the silencing materials, thereby characterized, that the application station for application of silencing materials includes a broad-slit nozzle (10) supplied via a robotic controlled metering means (14) with viscous silencing material (52), as well as a UV-light source (56) for sealing the outer surface of the silencing material layer (44) applied with the broad slit nozzle (10).

20. Device for production of vehicle body components which are provided on one broad surface with a strip-shaped silencing material layer (44), with an application station for application of silencing materials, thereby characterized, that an application station for silencing materials includes a broad-slit nozzle (10) supplied with viscous silencing material (52) by a robotic controlled metering device (14) as well as a robotic controlled (34) foil dispenser (58) for application of a moisture impermeable foil (46, 66) upon the silencing material layer (44) applied via the broad-slit nozzle (10), that the foil dispenser (58) includes a cutter (69), and that the length (a) between the cutter (69) and the foil (66) in the application station is smaller than the length (d) of the silencing material layer (44) between the application station of the foil and the broad slit nozzle (10).

21. Vehicle body component for vehicles with a silencing material layer provided upon one broad surface, thereby characterized, that the silencing material layer includes a viscous core layer (44) and a moisture-impermeable cover layer (46) or surface sealing layer.

22. Vehicle body part according to Claim 21, thereby characterized, that the cover layer (46) is thinner than the core layer (44).

23. Body part for vehicles with a silencing material layer provided upon one broad side surface, thereby characterized, that the silencing material layer includes a softer cured core layer (44) and a more rigid cured cover or silencing layer (46).

24. Body part according to Claim 23, thereby characterized, that the more rigid cover or silencing layer (46) is thicker than the softer core layer (44).

## Revendications

1. Procédé de fabrication d'éléments de carrosserie sur une face de côté large desquels est appliquée une couche de matière isolante (44) en forme de bande, **caractérisé en ce que** la matière isolante (52), constituée d'une matière plastique thermiquement durcissable, est appliquée sous une forme visqueuse directement sur la face de côté large de l'élément de carrosserie (48) à l'état brut, sous forme de couche (44), et est recouverte sur le côté large libre de la couche, de façon inamovible, d'une couche de recouvrement (46) imperméable à l'humidité, et **en ce que** l'élément de carrosserie ainsi préparé est stocké temporairement avec apport d'air et/ou apporté à un traitement supplémentaire et, au cours d'une étape ultérieure du processus, est peint en étant alors chauffé, ce qui s'accompagne d'une solidification de la matière isolante (44).

2. Procédé selon la revendication 1, **caractérisé en ce que** la matière isolante (44) est extrudée en grande surface, en utilisant une buse (10) à fente large, sur la face de côté large de l'élément de carrosserie (48) à l'état brut.

3. Procédé selon la revendication 2, **caractérisé en ce que** la couche de recouvrement (46) est, par un procédé de co-extrusion, appliquée sous une forme pâteuse conjointement avec la matière isolante (44).

4. Procédé selon la revendication 1 ou 2, **caractérisé en ce que** la couche de recouvrement (46) est dévidée sous forme de feuille (66) d'une bobine d'alimentation, et est assemblée à plat à la surface libre de la matière isolante (44) pendant l'application de cette dernière.

5. Procédé selon la revendication 4, **caractérisé en ce que** la feuille (66) est dévidée en passant par un rouleau de mise en forme (60), et assemblée à la couche de matière isolante avec un contour adapté.

6. Procédé selon la revendication 5, **caractérisé en ce que** la feuille (66) est pourvue de moulures formées par refoulement de matière au moyen de gorges circonférentielles dans le rouleau de mise en forme (60).

7. Procédé selon l'une des revendications 4 à 6, **caractérisé en ce qu'**on utilise comme feuille (66) une feuille métallique, de préférence une feuille d'aluminium.

8. Procédé selon l'une des revendications 4 à 6, **caractérisé en ce qu'**on utilise comme feuille (66) une feuille de matière plastique.

9. Procédé de fabrication d'éléments de carrosserie sur une face de côté large desquels est appliquée une couche de matière isolante (44) en forme de bande, **caractérisé en ce qu'**on utilise comme matière isolante une matière plastique réactive à deux composants, dont les composants de réaction (52, 54) sont mélangés dans une buse mélangeuse (10') à fente large en formant un mélange réactif visqueux et sont, par l'ouverture de cette buse, appliqués directement sur la face de côté large de l'élément de carrosserie (48) à l'état brut et y sont amenés en réaction, avant un traitement supplémentaire, en formant une couche de matière isolante (44) étanche à l'humidité, et **en ce que** l'élément de carrosserie ainsi préparé est stocké temporairement avec apport d'air et, au cours d'une étape ultérieure du processus, est peint et chauffé, ce qui s'accompagne d'une solidification de la matière isolante.

10. Procédé de fabrication d'éléments de carrosserie sur une face de côté large desquels est appliquée une couche de matière isolante en forme de bande, **caractérisé en ce que** la matière isolante, consistant en une matière réticulable sous l'action de lumière ultraviolette, est appliquée sous une forme visqueuse directement sur la face de côté large de l'élément de carrosserie (48) à l'état brut, et est irradiée de lumière ultraviolette (56) sur le côté large libre de la couche et ainsi scellée sur sa surface, et **en ce que** l'élément de carrosserie ainsi préparé est stocké temporairement avec apport d'air et/ou apporté à un traitement supplémentaire et, au cours d'une étape ultérieure du processus, est peint et chauffé, ce qui s'accompagne d'une solidification de la matière isolante (44).

11. Procédé de fabrication d'éléments de carrosserie sur une face de côté large desquels est appliquée une couche de matière isolante en forme de bande, **caractérisé en ce qu'**une première matière isolante (52) molle à l'état durci et une deuxième matière isolante (54) rigide à l'état durci sont, en étant superposées en couches (44, 46) du genre sandwich, appliquées sous une forme visqueuse directement sur la face de côté large de l'élément de carrosserie (48) à l'état brut, puis sont scellées sur leur surface en étanchéité à l'humidité, et **en ce que** l'élément de carrosserie ainsi préparé est stocké temporairement avec apport d'air et/ou apporté à un traitement supplémentaire et, au cours d'une étape ultérieure du processus, est peint et chauffé, ce qui s'accompagne d'une solidification des matières isolantes.

12. Installation de fabrication d'éléments de carrosserie qui sont pourvus sur une face de côté large d'une couche de matière isolante (44) en forme de bande, **caractérisée par** un poste d'application de matières isolantes qui présente au moins deux buses (10, 12) à fente large disposées l'une à la suite de l'autre dans la direction d'application, buses qui, au moyen d'un doseur respectif (14, 16) asservi par le biais d'une commande robotisée, peuvent être alimentées en matières visqueuses durcissables différentes (52, 54), les buses (10, 12) à fente large présentant des équipements de chauffage (36, 38) pouvant être asservis par le biais de régulateurs de température séparés (40, 42).

13. Installation selon la revendication 12, **caractérisée en ce que** la buse (10) à fente large antérieure dans la direction d'application peut être alimentée en matière isolante (52) thermiquement durcissable, et la buse (12) à fente large postérieure dans la direction d'application en matière isolante (54) durcissable en devenant étanche à l'humidité.

14. Installation selon la revendication 12 ou 13, **caractérisée en ce que** la buse (10) à fente large antérieure dans la direction d'application peut être alimentée en matière isolante (52) molle à l'état durci, et la buse (12) à fente large postérieure dans la direction d'application en matière isolante ou d'étanchéité (54) rigide à l'état durci.

15. Installation de fabrication d'éléments de carrosserie qui sont pourvus sur une face de côté large d'une couche de matière isolante en forme de bande, **caractérisée par** un poste d'application de matières isolantes qui présente une buse mélangeuse (10') à fente large constituée d'au moins deux coques métalliques divisibles résistantes à la pression, buse dont le mélangeur (50) est relié du côté d'entrée à deux doseurs (14, 16), pouvant être asservis par le biais d'une commande robotisée (34), pour les deux composants de réaction (52, 54) d'une matière plastique réactive.

16. Installation selon la revendication 15, **caractérisée en ce que** l'étage de mélange de la buse mélangeuse (10') à fente large est réalisé sous forme de mélangeur (50) statique ou dynamique.

17. Installation selon la revendication 15 ou 16, **caractérisée en ce que** les coques métalliques présentent une garniture remplaçable de matière plastique.

18. Installation selon l'une des revendications 15 à 17, **caractérisée en ce que** les coques métalliques sont revêtues d'un agent anti-adhésif, de préférence en tétrafluoréthylène.

19. Installation de fabrication d'éléments de carrosserie qui sont pourvus sur une face de côté large d'une couche de matière isolante (44) en forme de bande, **caractérisée par** un poste d'application de matières isolantes qui présente une buse (10) à fente large pouvant être alimentée en matière isolante visqueuse (52) au moyen d'un doseur (14) à commande robotisée, et une source de lumière ultraviolette (56) pour sceller en surface la couche de matière isolante (44) appliquée avec la buse (10) à fente large.

20. Installation de fabrication d'éléments de carrosserie qui sont pourvus sur une face de côté large d'une couche de matière isolante (44) en forme de bande, avec un poste d'application de matières isolantes, **caractérisée en ce que** le poste d'application présente une buse (10) à fente large pouvant être alimentée en matière isolante visqueuse (52) au moyen d'un doseur (14) asservi par une commande robotisée, ainsi qu'un distributeur de feuilles (58), pouvant être asservi par le biais de la commande robotisée (34), pour appliquer une feuille (46, 66) imperméable à l'humidité sur la couche de matière isolante (44) appliquée au moyen de la buse (10) à fente large, **en ce que** le distributeur de feuilles (58) présente un dispositif de coupe (69), et **en ce que** la longueur (a) de la feuille (66) se trouvant entre le dispositif de coupe (69) et le point d'application est inférieure à la longueur (d) de la couche de matière isolante (44) se trouvant entre le point d'application de la feuille et la buse (10) à fente large.

21. Elément de carrosserie pour véhicules automobiles, avec une couche de matière isolante disposée sur une face de côté large, **caractérisé en ce que** la couche de matière isolante présente une couche d'âme (44) visqueuse et un scellement de surface ou une couche de recouvrement (46) imperméable à l'humidité.

22. Elément de carrosserie selon la revendication 21, **caractérisé en ce que** la couche de recouvrement (46) est plus mince que la couche d'âme (44).

23. Elément de carrosserie pour véhicules automobiles, avec une couche de matière isolante disposée sur une face de côté large, **caractérisé en ce que** la couche de matière isolante présente une couche d'âme (44) molle à l'état durci et une couche de recouvrement ou d'isolation (46) rigide à l'état durci.

24. Elément de carrosserie selon la revendication 23, **caractérisé en ce que** la couche plus rigide (46) de recouvrement ou d'isolation est plus épaisse que la couche d'âme plus molle (44).
